**Europäisches Patentamt**

**European Patent Office**

**Office européen des brevets**

(11) Veröffentlichungsnummer: **0 292 661**
**A1**

## (12) EUROPÄISCHE PATENTANMELDUNG

(21) Anmeldenummer: **88104141.2**

(22) Anmeldetag: **16.03.88**

(30) Priorität: **29.05.87 DE 3718095**

(43) Veröffentlichungstag der Anmeldung:
**30.11.88 Patentblatt 88/48**

(84) Benannte Vertragsstaaten:
**AT BE CH DE ES FR GB IT LI NL SE**

(51) Int. Cl.⁴ **C04B 35/56 , C04B 35/80**

(71) Anmelder: **Hutschenreuther AG**

**D-8672 Selb(DE)**

(72) Erfinder: **Müller-Zell, Axel, Dr.**
**Plössberger Weg 14**
**D-8672 Selb(DE)**
Erfinder: **Hahn, Christoph, Dr.**
**Bei der Linde 20**
**D-8672 Selb(DE)**

(74) Vertreter: **Patentanwälte Czowalla . Matschkur**
**+ Partner**
**Dr.-Kurt-Schumacher-Strasse 23 Postfach**
**9109**
**D-8500 Nürnberg 11(DE)**

(54) **Polykristalliner Formkörper aus Siliciumcarbid und Verfahren zu seiner Herstellung.**

㊼ Polykristalliner Formkörper aus drucklos gesintertem Siliciumcarbid, wobei der fertige Formkörper zu 5 bis 100 Masseanteilen des SiC aus $\beta$-SiC besteht und eine Dichte von mindestens 93 % der theoretischen Dichte des SiC aufweist.

EP 0 292 661 A1

## Polykristalliner Formkörper aus Siliciumcarbid und Verfahren zu seiner Herstellung

Die Erfindung richtet sich auf einen polykristallinen Formkörper aus drucklos gesintertem Siliciumcarbid. Diese sind in mehreren Varianten bekannt, und sie zeichnen sich durch eine Vielzahl für den praktischen Gebrauch bevorzugter physikalischer und chemischer Eigenschaften aus, insbesondere durch eine geringe spezifische Dichte, eine niedrige thermische Ausdehnung sowie eine gute Oxidations- und Korrosionsbeständigkeit und eine beachtliche Festigkeit auch bei hohen Temperaturen. Ihre hohe Kriechfestigkeit und der extrem niedrige Reibungskoeffizient werden ebenso geschätzt wie ihre außerordentlich große Härte, woraus insgesamt ein hohes Maß an Temperaturwechselbeständigkeit resultiert. Aus diesen und weiteren Vorzügen folgt die Eignung solcher Formkörper als Hochleistungswerkstoffe für besonders stark beanspruchte Teile, insbesondere im Maschinenbau. Zur Herstellung derartiger Formkörper bediente man sich lange Zeit des Heißpressens von SiC unter Zusatz von Additiven, wie Bor, Aluminium und Eisen. Die DE-OS 23 63 036 offenbart ein auf dem Heißpressen beruhendes Verfahren, mittels welchem Erzeugnisse mit Festigkeitswerten von 600 N.mm² erreicht werden. Allerdings besitzen diese heißgepreßten Formkörper die Eigenschaft eines beachtlichen Festigkeitsabfalls bei hohen Temperaturen. Ein weiter Nachteil besteht in dem aufwendigen und vor allem nur auf geometrisch einfach gestaltete Teile bezogenen Herstellungsverfahren, das vornehmlich wegen seiner Unwirtschaftlichkeit heute nicht mehr dem geforderten Standard entspricht.

Demgegenüber hat sich das drucklose Sintern von Formkörpern aus SiC als wesentlich wirtschaftlicher erwiesen, und es gewährt darüber hinaus dem Fachmann erheblich größere Gestaltungsfreiheit bei der Formgebung der Erzeugnisse. Auch bei diesem Verfahren bedient man sich verschiedener Additive, vornehmlich Bor, Aluminium und Beryllium bzw. deren Verbindungen. Die DE-OS 24 49 662 offenbart ein Verfahren zum drucklosen Sintern von Formkörpern aus SiC, das von freinem SiC-Pulver der β-Modifikation ausgeht und Zusätze von Bor und Kohlenstoff zum SiC-Pulver verwendet. Nach der Formgebung wird das Erzeugnis in einer inerten Atmosphäre bei Temperaturen von 1 900° bis 2 100° C drucklos gesintert. Die hierbei gebildeten Formkörper besitzen eine Dichte von mindestens 85 % der theoretischen Dichte des SiC. Nach diesem Verfahren lassen sich Dichten bis zu über 95 % der theoretischen Dichte des SiC dann erreichen, wenn der drucklose Sintervorgang in Gegenwart von Stickstoff durchgeführt wird. Das Sintern von Ausgangs-β-SiC zu Formkörper hoher Dichte verlangt erfahrungsgemäß Sintertemperaturen über 2 100° C. Dies hat allerdings eine praktisch vollständige Umwandlung des β-SiC in die α-Form zur Folge. Ist die Bildung von Formkörpern erwünscht, deren SiC überwiegebnd in der β-Modifikation vorliegt, lassen sich nach den bekanten Verfahren kaum Dichtewerte über 80 % der theoretischen Dichte erreichen. Aus dieser praktischen Erfahrung hat man es sich stets zum Ziel gesetzt, ein unäquiaxiales Gefüge von α-SiC zu erlangen, und zwar unabhängig davon, ob β-SiC oder α-SiC oder Gemische beider SiC-Formen das Ausgangsmaterial bilden. Daß hingegen gesinterte Formkörper wesentliche Vorteile aufweisen, deren Gefüge überwiegend aus β-SiC besteht, wurde erst in jüngster Zeit erkannt. Deshalb ist die Bildung solcher polykristalliner Formkörper ebenso Aufgabe der Erfindung wie ein zu ihrer Herstellung dienendes Verfahren. Man führt diese Vorzüge, soweit bisher ersichtlich, vor allem auf die stengelige, nadlig verfilzte Gefügestruktur dieser SiC-Modifikation zurück. Der erfindungsgemäße Formkörper aus drucklos gesintertem SiC zeichnet sich dadurch aus, daß er zu 5 bis 100 Masseanteilen des SiC aus β-SiC besteht und eine Dichte von mindestens 93 % der theoretischen Dichte des SiC ausweist.

Es hat sich herausgestellt, daß Formkörper dieser Art ein besonders hohes Maß an Homogenität aufweisen, was darauf zurückzuführen ist, daß die zu seiner Herstellung verwendeten β-SiC-Pulver stets eine hohe bis höchste Reinheit aufweisen. Dieser Gesichtspunkt erweist sich aber als ausschlaggebend für die verschiedenen besonders hervortretenden physikalischen Eigenschaften dieser Formkörper. Ihre Härte ist deutlich höher als die bisher bekannter Sinterkörper aus SiC, und ebenso zeichnen sie sich durch bessere Verschleißeigenschaften aus. Weiter läßt sich die Biegebruchfestigkeit bei Raumtemperatur, aber besonders auch bei hohen Temperaturen bis 1 300° C gegenüber den bekannten Werkstoffen erheblich steigern, was sich insgesamt auf eine höhere Temperaturwechselbeständigkeit auswirkt. Von besonderer Bedeutung erweist sich die Verbesserung der Rißzähigkeitswerte des erfindungsgemäßen Werkstoffs, die die bisher gekannten Werte deutlich übersteigt. Es ist davon auszugehen, daß die stengelige Struktur mit ihrem nadlig verfilzten Gefüge einem Rißfortschritt unter Belastung einen ungleich höheren Widerstand entgegensetzt als das uniäquiaxiale Gefüge der bekannten Formkörper aus α-SiC. Ausschlaggebend für diese Eigenschaft ist ein Formkörper bei dem ein Teil des β-SiC aus Whiskern besteht, die bekanntlich ausschließlich aus β-SiC gebildet sind.

Es liegt darüber hinaus im Rahmen der Erfindung, daß das β-SiC des drucklos gesinterten Formkörpers zu einem nicht unbeträcht lichen Teil aus in situ gebildeten β-SiC besteht. Dieses ersetzt den beim Sintervorgang möglicherweise in die α-Modifikation umgewandelten SiC-Anteil, ganz oder weitgehend.

Es entspricht der Zielsetzung der Erfindung, daß das SiC des fertigen Formkörpers weitgehend in der β-Form vorliegt, die beim Sintervorgang erfolgende Umwandlung von β-SiC, wenn solches als Ausgangsmaterial Verwendung findet, in α-SiC zu verzögern. Es ist bekannt, daß der Phasenwechsel bei aluminiumdotierten SiC bei etwa 1 600° C eintritt, bei bordotiertem SiC hingegen bei etwa 1 800° C. In beiden Fällen geht mit diesem Vorgang ein außerordentliches Kornwachstum der α-Phase einher. Derartige Sinterkörper zeichnen sich durch ein Gefüge aus großflächigen α-SiC-Kristallen aus. Dieses sogenannte Riesenkorn schränkt die Festigkeit der Erzeugnisse wesentlich ein.

Die DE-OS 26 27 856 offenbart ein Verfahren, welches von einem Gemisch von pulverförmigen β-SiC mit α-SiC bis 5 Gew.-% ausgeht. Die α-Phase soll beim drucklosen Sintern wie die Keime von Impfkristallen wirken, und man beabsichtigt damit eine kontrollierte Umwandlung des β-SiC in das α-SiC, um dadurch das Kornwachstum weitgehend steuern zu können. Allerdings verläuft die Umwandlung der β-Phase in die α-Modifikation als die thermodynamisch stabilere Form des SiC außerordentlich rasch. Die DE-OS 26 24 641 befaßt sich ebenfalls mit dem drucklosen Sintern von α-SiC-Pulver und hebt dessen leichtere Zugänglichkeit und Kostenvorteile als besonders vorteilhaft hervor. Das drucklose Sintern von α- und β – SiC mit nur Bor- und Kohlenstoff-enthaltenden Zusätzen ist aber bekanntlich verfahrenstechnisch schwer zu beherrschen, will man Körper hoher Dichte und Zugleich gleichmäßigen feinkörnigen Gefüges erreichen, da die Sintertemperatur in besonders engen Grenzen exakt eingehalten werden muß und bereits gerinfügig überhöhte Temperaturen ein Riesenkornwachstum sowohl bei der β- als auch bei der α-Phase hervorrufen, was wiederum für wiederum für einen unerwünschten Abfall der Festigkeitswerte ursächlich ist.

In der Arbeit von Shinozaki u.a. in American Ceramic Society Bulletin, 64, (10), 1389-93 (1985) wird darauf hingewiesen, daß bei bor-, aluminium- und kohlenstoffdotiertem β-SiC die Phasenumwandlung in die α-Modifikation bei Temperaturen von mehr als 1 800° schnell abläuft und bei einer Temperatur von etwa 1 950° nahezu abgeschlossen ist. Diese Literaturstelle weist außerdem daraufhin, daß bei nur bor- und kohlenstoffdotiertem SiC dieser Vorhang bei einer 100° C höheren Temperatur abläuft.

In der Vorveröffentlichung in J.Amer.Ceram.Soc., 68 (9) 479-82 (1985) von D. Stutz, S. Prochazka und J. Lorenz wird über die Sinterung von β-SiC-Pulver referiert, welches mit Bor allein, Aluminium allein oder mit B und Al dotiert ist. Es kommt in jedem Fall zu einer Umwandlung mit Bildung von α-SiC Polytypen. Bor begünstigt die 6H-Bildung, Al die 4H-Bildung und ein Gemisch aus B und Al als Sinteradditive läßt vorwiegend 4H und 6H-Polytypen entstehen. Gesteuert werden kann die Polytypenausbildung etwas durch die Temperatur und Atmosphäre des Sinterprogramms. Nur bei der Doppeldotierung mit B und Al kann die Sintertemperatur so stark gesenkt werden, daß die β-Umwandlung verzögert wird. Die Haltezeiten bei z.B. 1350° C, 1750° C und 1850° C sind Voraussetzung für eine gleichmäßige Verteilung der Sinteradditive und Flüssigphasenausbildung. Erklärtes Zeil dieser Anmeldung ist einerseits die Polytypenbildung über ein Verfahren zu steuern und andererseits über die B und Al-Doppeldotierung die Riesenkornbildung der Polyphasen zu verhindern, da eine Vergröberung des Gefüges durch Riesenkorn einer Verdichtung entgegensteht.

Der erfindungsgemäße Formkörper soll einen bestimmten Anteil an β-SiC aufzuweisen, der exakt eingestellt und stabilisiert wird. Das ist entscheidend für die Einstellung bestimmter Werkstoffdaten für die jeweilige Anwendung.

Das erfindungsgemäße Verfahren zur Herstellung von Formkörpern der oben bezeichneten Art zeichnet sich deshalb dadurch aus, daß das β-SiC beim Sintervorgang im Formkörper stabilisiert wird, um damit den Übergang in die α-Phase so begrenzt wie nur irgend möglich zu halten. Als besonders vorteilhaft hat es sich im Rahmen dieses allgemeinen Gedankens erwiesen, daß der als β-SiC-Whiskers vorliegende SiC-Anteil stabilisiert wird. Dieser eignet sich hierzu bevorzugt, zum anderen ist aber grade dieser Anteil des β-SiC für die angestrebten günstigen Eigenschaften der Formkörper maßgeblich.

Das erfindungsgemäße Verfahren eröffnet einen weiteren Weg zur Stabilisierung von β-SiC in der Form, daß das beim Sintervorgang in situ gebildete β-SiC stabilisiert wird. Dieser Anteil der β-Modifikation kann gegebenenfalls zusätzlich zu dem β – Anteil anderer Herkunft hinzutreten und damit den Anteil an im Endprodukt vorliegenden β-SiC vergrößern. Ein praktikabler Weg zum Stabilisieren dieses β-SiC-Anteils im Sinterkörper besteht darin, dieses im Ausgangsmaterial den Zusatz von α-SiC auf maximal 1 % α-SiC zu begrenzen. Eine andere Alternative besteht darin, zum stabilisieren des β-SiC dem Ausgangsmaterial bestimmte Metalloxide, wie FeO, $Fe_2O_3$, $B_2O_3$, NiO, CoO, MgO zuzusetzen. Es hat sich nämlich überraschenderweise gezeigt, daß diese Metalloxide mit SiC nach folgender Gleichung reagieren

$$SiC + MeO \rightarrow Si + Me + CO \quad (1).$$

Diese Reaktion beruht auf der Erkenntnis, daß die Bildungsenergie der Metallcarbide dieser Metall größer ist als diejenige von SiC. Es kommt infolgedessen zu einer Neubildung von $\beta$-SiC, wobei die Metalle, zumindest teilweise noch den Sintervorgang fördern. Die Einhaltung besonderer Verfahrensbedingungen im Brand fördern diesen Vorgang. So soll der Temperaturbereich vom 1 600°C bis zur Endtemperatur möglichst schnell durchfahren werden, da bekanntlich ab einer Temperatur von 1 600°C, und zwar je nach Dotierung, die Umwandlung der $\beta$-Form in die $\alpha$-Form einsetzt. Läuft die vorstehende Reaktion bei Temperaturen $\geqq$ 2 100°C ab, ergibt sich eine Umsetzung von zumindest Teilen der Metalloxide mit bereits umgewandeltem $\alpha$-SiC mit der Folge einer Neubildung von $\beta$-SiC. Die Metalloxide werden in einem Anteil von insgesamt bis zu 5 Masse-% dem Ausgangs-$\beta$-SiC zugesetzt. Hierbei kommen einzelne Oxide wie auch Gemische der genannten Oxide in Betracht.

Eine andere Möglichkeit zur Erlangung eines größtmöglichen Anteils von $\beta$-SiC im Sinterkörper sieht die Erfindung in der Weise von, daß dem Ausgangs-$\beta$-SiC dieses bildende Si und/oder C enthaltende Materialien zugesetzt werden.

Als besonderes vorteilhaft hat es sich erwiesen, den Formkörper in einer N-Radikale und/oder Si und/oder SiO und/oder CO enthaltenden Atmosphäre zu sintern. Diese Verfahrensweise erfüllt zugleich zwei Forderungen des erfindungsgemäßen Verfahrens, nämlich die Bildung von $\beta$-SiC und dessen Stabilisierung. Damit wird das bei der Sinterung des SiC vielfach auftretende Riesenkornwachstum gehemmt. Stickstoff verzögert die Umwandlung der $\beta$-Form in die $\alpha$-Form beim Dichtsintern und verschiebt den Vorgang zu höheren Temperaturen, so daß zum Erreichen vergleichbarer theoretischer Dichten um etwa 100°C höhere Temperaturen erforderlich sind als bei der gebräuchlichen Argon- Schutzgasatmosphäre. Die mit der Erfindung gewonnenen Erkenntnisse lassen es aber als wahrscheinlich erscheinen, daß die stickstoffradikalhaltige Schutzgasatmosphäre für die Stabilisierung des $\beta$-SiC vornehmlich verantwortlich ist.

Es hat sich erwiesen, daß die Freiräume zwischen den nadelartigen Gefügeteilen des SiC als Porenräume zur Aufnahme freien Kohlenstoffs zu sehen sind. Diese Erscheinung erlangt besondere Bedeutung bei der Anwendung der Formkörper als Gleitelemente, da in diesen Hohlräumen der als Schmiermittel wirkende freie Kohlenstoff abgelegt und wieder entnommen werden kann. Das stengelige Gefüge des erfindungsgemäß gewonnenen Sinterkörpers, dessen Nadeln bis zu 140 um und dessen Durchmesser 10 um betragen können, erweist sich als optimal für die Integrierung von $\beta$-SiC-Whiskern. Die Whiskerverstärkung ist als solche an sich bekannt. Ein $\beta$-SiC-Whisker verliert allerdings seine Whiskerfunktion und damit auch seine an sich erwünschte verstärkende Funktion durch die Umwandlung der $\beta$-Modefikation des SiC in die $\alpha$-Form. Als vorteilhaft erweist sich der Whisker aus $\beta$-SiC nur dann, wenn er in einer $\beta$- oder $\beta$-/$\alpha$-SiC-Matrix erhalten bleibt. Hierfür ist die beim erfindungsgemäßen Verfahren präferierte Stabilisierung des $\beta$-SiC auch in der Whiskerform von ausschlaggebender Bedeutung.

Die Erfindung wird im folgenden anhand einiger Beispiele näher erläutert:

Beispiel 1

Ein aufbereitetes Gemisch aus $\beta$-SiC, 0,4 Massenanteilen in % Bor amorph, 0,6 Massenanteile in % $B_2O_3$, 2,4 Massenanteilen in % Kohlenstoff aus einem organischen kohlenstoffhaltigen Material und einem Binderzusatz wird nach dem Verpressen und Verkoken gesintert. Die Sinterung verläuft bis 1 550°C unter Vakuum. Dann wird mit maximaler Aufheizgeschwindigkeit von ca. 25°C/min. auf 2 130°C aufgeheizt und bei 2 150°C die Sinterung mit einer 30minütigen Haltezeit beendet. Die Schutzgasatmosphäre besteht aus einem Helium/Wasserstoffgemisch und kurzlebigen Stickstoffradikalen, die aus eingeleiteten silicium-stickstoffhaltigen organischen Verbindungen herrühren, oder auch aus Ammoniak oder aus einem Nitrid. Der mit 92,5 % theoretischer Dichte erhaltene polykristalline Formkörper besteht aus zu 72 % aus $\beta$-SiC. Die röntgenographische Bestimmung der $\beta$- und $\alpha$-Anteile wird nach Ziemer, Silikattechnik 30 (1979), Heft 3, vorgenommen. Die Rißzähigkeit ist um 30 % höher als bei herkönmmenlichen $\alpha$-SiC.

Beispiel 2

100 Masse-Teile eines reinen $\beta$-SiC werden mit 5 Teilen eines organischen Kohlenstofflieferanten mit iener Ausbeute von mehr als 55 % Kohlenstoff, 0,5 Teilen Bor amorph, 0,8 Teilen $Fe_2O_3$ und einem Binder in Zyklohexan gefriergetrocknet. Das trockene Pulver wird statisch zu einem Formkörper verdichtet und nach dem Verkokungsbrand gesintert. Ein Vakuum von $5 \times 10^{-2}$ herrscht im Brand bis 1 600°C. Von 1 650°C wird mit 25°C/min. schnellstmöglich in einer Argon-Wasserstoffatmosphäre auf 2 170°C aufgeheizt und nach einer Haltezeit von 30 Minuten der Sinterprozeß beendet. Das Resultat ist ein polykristalliner Formkörper mit 94,4 % theoretischer Dichte des SiC und 61 % $\beta$-SiC-Anteil. Das Gefüge zeigt lange $\beta$ - SiC-Nadeln bis 140 $\mu$m Länge und 10 $\mu$m Durchmesser in einer feinen, "verfilzten" Matrix aus $\beta$- und -SiC.

Beispiel 3

Ein mit 10 Massenanteilen in % $\beta$-SiC-Whisker versetztes, sinteraktives $\alpha$-SiC mit zusätzlich 0,08 % Kobaltoxid und 1,0 % Eisenoxid wird isostatisch verpreßt, verkokt und bei 2 170°C unter Argon-Wasserstoff-Schutzgasatmosphäre im Graphitofen gesintert. Die Röntgenanalyse des polykristallinen Formkörpers ergab 13 % $\beta$-SiC neben restlichem $\alpha$ - SiC. Die Dichte betrug 93 % theroetische Dichte des SiC.

Beispiel 4

Es wurden 10 Massenanteile in % $\beta$-SiC-Whisker in ein sinteraktives $\beta$-SiC eingebracht. Die Dichte des polykristallinen SiC-Körpers beträfgt 94.3% theoretischer Dichte des SiC nach einer Sinterung, die wie folgt abläuft: Vakuum bis 1 600°C, Argon-Waserstoff-Atmosphäre bis 2 130°C und Aufheizung in 20 Minuten, Haltezeit 2 130°C 30 Minuten lang, in 10 Minuten auf 2 170°C aufgeheiztk, Haltezeit bei 2 170°C 30 Minuten. Das $\alpha$. $\beta$-Verhältnis im Sinterkörper beträgt 45 % $\alpha$-SiC zu 55 % $\beta$-SiC.

Beispiel 5

Ein mit geringen Mengen Silicium geimpftes, sinteraktives $\beta$-SiC wird zu einem Formkörper verpreßt, verkokt und unter folgenden Bedingungen gesintert: Heliumatmosphäre bis 1 450°C, kohlenmonoxidhaltige Heliumatmosphäre bis 1 800°C, Helium/Wasserstoff Ammoniak-Gasatmosphäre bis 2 150°C. Die Dichte des Sic liegt bei 93 % tD bei einem $\alpha$ $\beta$-Vehältnis von 26 zu 74.

Beispiel 6

Ein mit einem Silicium- und Kohlenstoff-liefernden Si- und C-haltigen organischen Material versehenen $\beta$-SiC mit einer Verunreinigung an $\alpha$-SiC von < 1 % wird in He-Atmosphäre bei 2 170°C gesintert. Die Dichte beträgt 93,8 % theoretische Dichte des SiC bei einem $\alpha$/$\beta$-Verhältnis von 86/14.

## Ansprüche

1. Polykristalliner Formkörper aus drucklos gesintertem Siliciumcarbid, dadurch gekennzeichnet, daß der fertige Formkörper zu 5 bis 100 Masseanteilen des SiC aus $\beta$-SiC besteht und eine Dichte von mindestens 93 % der theoreti schen Dichte des SiC aufweist.

2. Polykristalliner Formkörper nach Anspruch 1, dadurch gekennzeichnet, daß ein Teil des $\beta$-SiC aus Whiskern besteht.

3. Polykristalliner Formkörper nach Anspruch 1 oder 2, dadurch gekennzeichnet, daß ein Teil des $\beta$-SiC aus in situ gebildetem $\beta$-SiC besteht.

4. Verfahren zur Herstellung von polykristallinen Formkörpern aus $\beta$-SiC, dadurch gekennzeichnet, daß das $\beta$-SiC beim Sintern im Formkörper stabilisiert wird.

5. Verfahren nach Anspruch 4, dadurch gekennzeichnet, daß der als $\beta$-SiC-Whiskers vorliegende SiC-Anteil stabilisiert wird.

6. Verfahren nach Anspruch 4 oder 5, dadurch gekennzeichnet, daß beim Sintervorgang $\beta$-SiC in situ gebildet und stabilisiert wird.

7. Verfahren nach einem der Ansprüche 4 bis 6, dadurch gekennzeichnet, daß zum Stabilisieren des $\beta$-SiC ein Anteil von weniger als 1 % $\alpha$-SiC in dem Ausgangs-$\beta$-SiC enthalten ist.

8. Verfahren nach einem der Ansprüche 4 bis 7, dadurch gekennzeichnet, daß dem Ausgangs-SiC Metalloxide, wie Eisenoxid, Kobaltoxid, Nickeloxid, Magnesiumoxid oder Boroxid, einzeln oder im Gemisch, zugesetzt werden.

9. Verfahren nach Anspruch 8, dadurch gekennzeichnet, daß die Oxide in einem Anteil von insgesamt bis zu 5 % dem Ausgangs-$\beta$-SiC zugesetzt werden.

10. Verfahren nach einem der Ansprüch 4 bis 9, dadurch gekennzeichnet, daß dem Ausgangs-$\beta$-SiC dieses bildende Si und/oder C enthaltende Materialien zugesetzt werden.

11. Verfahren nach Anspruch 10, dadurch gekennzeichnet, daß die $\beta$-SiC-Bildner in einem Anteil von bis zu je 1 %, bezogen auf Gesamt-Si und -C zugesetzt werden.

12. Verfahren nach einem der Ansprüche 4 bis 11, dadurch gekennzeichnet, daß der Formkörper in einer N-Radikale und/oder Si und/oder SiO und/oder CO enthaltenden Atmosphäre gesintert wird.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | CHEMICAL ABSTRACTS, Band 106, Nr. 6, Februar 1987, Seite 291, Zusammenfassung Nr. 37499c, Columbus, Ohio, US; & JP-A-61 127 664 (IBIDEN CO., LTD) 14-06-1986 * Zusammenfassung * --- | 1 | C 04 B 35/56 C 04 B 35/80 |
| X | EP-A-0 165 554 (BRIDGESTONE CORP.) * Anspruch 1; Seite 3, Zeilen 13-24; Seite 19, Zeilen 10-24 * --- | 1 | |
| X | CHEMICAL ABSTRACTS, Band 94, Nr. 18, Mai 1981, Seite 300, Zusammenfassung Nr. 144295p, Columbus, Ohio, US; & JP-A-80 116 666 (NGK INSULATORS, LTD) 08-09-1980 * Zusammenfassung * --- | 1,4,12 | |
| X | CHEMICAL ABSTRACTS, Band 105, Nr. 26, Dezember 1986, Seite 287, Zusammenfassung Nr. 231369e, Columbus, Ohio, US; & JP-A-61 168 567 (IBIDEN CO., LTD) 30-07-1986 * Zusammenfassung * --- | 1,4,12 | **RECHERCHIERTE SACHGEBIETE (Int. Cl.4)** |
| X | EP-A-0 110 053 (HUTSCHENREUTHER AG) * Ansprüche 1,6,7; Seite 9, Zeilen 28-33; Seite 13 * --- | 1,4,12 | C 04 B |
| X | EP-A-0 148 277 (KUROSAKI REFRACTORIES LTD) * Anspruch 1; Seite 2, Zeilen 13-16; Seite 3, Zeilen 8-25; Seite 12, Zeilen 4-11 * | 1,3,4,6 ,10-12 | |
| Y | --- -/- | 2,5 | |

Der vorliegende Recherchenbericht wurde für alle Patentansprüche erstellt

| Recherchenort | Abschlußdatum der Recherche | Prüfer |
|---|---|---|
| DEN HAAG | 01-09-1988 | SCHURMANS H.D.R. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

Europäisches
Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | DE-A-3 409 385 (SHIN NISSO KAKO CO.) * Ansprüche 1,8; Seite 4, Zeilen 33-38; Seite 5, Zeilen 1-17; Seite 16, Zeilen 27-38; Seite 17, Zeilen 1-19 * --- | 2,5 | |
| D,X | US-A-4 041 117 (S. PROCHAZKA) * Anspruch 1; Spalte 9, Tabelle I, Beispiele 4,7 * --- | 1,4,7 | |
| A | CHEMICAL ABSTRACTS, Band 101, Nr. 14, 1. Oktober 1984, Seite 285, Zusammenfassung Nr. 115725m, Columbus, Ohio, US; & JP-A-59 78 975 (DAIDO STEEL CO., LTD) 08-05-1984 ----- | 1,4,8,9 | |

RECHERCHIERTE SACHGEBIETE (Int. Cl.4)

Der vorliegende Recherchenbericht wurde für alle Patentansprüche erstellt

| Recherchenort | Abschlußdatum der Recherche | Prüfer |
|---|---|---|
| DEN HAAG | 01-09-1988 | SCHURMANS H.D.R. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

............................................................
& : Mitglied der gleichen Patentfamilie, übereinstimmendes Dokument

EPO FORM 1503 03.82 (P0403)